## Europäisches Patentamt
## European Patent Office
## Office européen des brevets

(11) Veröffentlichungsnummer: **0 270 073 B1**

# EUROPÄISCHE PATENTSCHRIFT

(45) Veröffentlichungstag der Patentschrift: **13.05.92**

(51) Int. Cl.⁵: **C08L 21/00**, C08J 3/20

(21) Anmeldenummer: **87117749.9**

(22) Anmeldetag: **01.12.87**

(54) **Kautschukvulkanisate mit verminderter Wärmeentwicklung bei dynamischer Verformung, Verfahren zu ihrer Herstellung und ihre Verwendung.**

(30) Priorität: **03.12.86 DE 3641344**

(43) Veröffentlichungstag der Anmeldung:
**08.06.88 Patentblatt 88/23**

(45) Bekanntmachung des Hinweises auf die Patenterteilung:
**13.05.92 Patentblatt 92/20**

(84) Benannte Vertragsstaaten:
**DE FR GB IT LU**

(56) Entgegenhaltungen:
**EP-A- 0 051 450**
**DE-A- 3 342 464**

**DATABASE/WPIL, Nr.82-73523E (35), Derwent publications Ltd., London, GB**

(73) Patentinhaber: **HOECHST AKTIENGESELL-SCHAFT**
**Postfach 80 03 20**
**W-6230 Frankfurt am Main 80(DE)**

(72) Erfinder: **Sattelmeyer, Richard, Dr.**
**Gabelsbornstrasse 32**
**W-6200 Wiesbaden(DE)**

**Beschreibung**

Die Erfindung betrifft Kautschukvulkanisate aus vulkanisierbaren Gummimischungen, die mindestens einen Kautschuktyp, ein Verstärkerharzsystem auf Basis von härtbaren Phenolharzen sowie sonstige übliche Bestandteile enthalten, wobei die vulkanisierbaren Gummimischungen aus mindestens zwei Kautschukmischungen unterschiedlicher Zusammensetzung hergestellt worden sind, Verfahren zu ihrer Herstellung und ihre Verwendung insbesondere als Bauteile von Fahrzeugreifen sowie als technische Gummiwaren.

Die Anwendung von härtbaren Phenolharzen bei der Herstellung von Kautschukvulkanisaten ist seit längerer Zeit bekannt. Diese üblicherweise auch als Verstärkerharze bezeichneten Produkte stellen Phenolharze vom Typ eines Novolaks dar und werden durch geeignete Härtungsmittel während der Vulkanisation des Kautschuks gehärtet, d. h. vernetzt. Als Härtungsmittel werden z. B. Formaldehyddonatoren wie Hexamethylentetramin und Methylolgruppen enthaltende teil- bzw. vollveretherte Melamin- und Harnstoffharze eingesetzt. Die Anwendung solcher Harzsysteme in den Gummimischungen führt zur Verbesserung einiger wichtiger mechanischer Eigenschaften der Vulkanisate, wie z. B. der Spannungswerte sowie einer Erhöhung der Härte. Andererseits weisen derartige Vulkanisate bei wiederholten mechanischen Verformungen eine hohe Wärmeentwicklung auf, die mit der Zeit zu einer Verschlechterung der Gesamteigenschaften oder sogar zu einer Zerstörung des Materials führen kann.

DE-A-33 42 464 beschreibt ein Verfahren, wonach man bei Verwendung von Novolakharzen mit Härter als Verstärkerharz in vulkanisierbaren Kautschukmischungen den Novolak und den Härter getrennt in den Kautschuk einarbeitet und die Einmischtemperatur des Novolaks unterhalb seines Erweichungspunktes hält. Die Verwendung verschiedener Kautschuk-Grundmischungen wird an keiner Stelle erwähnt. Bei der Herstellung des Beschleuniger-Batches III in Beispiel 1 wird zwar eine geringe Menge an Naturkautschuk verwendet, jedoch enthält dieser Batch keinen Füllstoff.

EP-A-051 450 beschreibt die Herstellung von Kautschuk/Ruß/Mischungen, die außer Ruß als verstärkendem Füllstoff keine Verstärkerharzsysteme enthalten. Aus DERWENT ABSTRACT Nr.82 - 7352E (35) ist die Herstellung einer zur Verwendung in Reifenlaufflächen geeigneten Kautschukmischung durch Vermischen einer Rohkautschukkomponente, die zwei verschiedene Rohkautschuktypen enthält, mit Ruß und einem Phenolharz oder einem Melaminharz in einem Kneter bekannt.

Überraschenderweise wurde nun gefunden, daß die Wärmeentwicklung von Kautschukvulkanisaten gleicher Rezeptur bei dynamischer Belastung weitaus geringer ist, wenn die eingesetzte Kautschukmischung statt aus einer einzigen Mischung aus mindestens zwei unterschiedlich zusammengesetzten Kautschukmischungen hergestellt wurde, von denen, für den Fall des Einsatzes von z. B. zwei verschiedenen Mischungen, die eine Mischung A 50 bis 95 GT ( = Gewichtsteile) Kautschuk, 30 bis 150 GT Füllstoff, und die andere Mischung B 50 bis 5 GT Kautschuk, 80 bis 5 GT Füllstoff, bezogen auf 100 GT der in der Endmischung insgesamt eingesetzten Kautschukmenge, und mindestens eine dieser Mischungen A bzw. B 2 bis 30 GT eines Verstärkerharzsystems enthält.

Das Verhalten der erfindungsgemäßen Vulkanisate ist besonders deshalb überraschend, weil die mechanischen Eigenschaften, wie z. B. die Härte, die Reißfestigkeit, die Reißdehnung und die Spannungswerte sich nicht wesentlich von solchen Vulkanisaten unterscheiden, die bei gleicher Rezeptur nur aus einer einzigen Mischung statt aus verschiedenen, unterschiedlich zusammengesetzten Mischungen hergestellt worden sind.

Gegenstand der Erfindung sind daher Kautschukvulkanisate auf Basis mindestens eines Kautschuktyps und sonstigen üblichen Bestandteilen, wobei die endgültige vulkanisierbare Kautschukmischung durch Vermischen von mindestens zwei Kautschuk-Grundmischungen unterschiedlicher Zusammensetzung hergestellt wird und dabei die eine Grundmischung A 50 bis 95 GT Kautschuk, 30 bis 150 GT Füllstoff, vorzugsweise Ruß, und eine weitere Grundmischung B 50 bis 5 GT Kautschuk, 80 bis 5 GT Füllstoff, vorzugsweise Ruß, bezogen auf 100 GT der in der Endmischung insgesamt eingesezten Kautschukmenge, und mindestens eine der Grundmischungen 2 bis 30 GT eines Verstärkerharzsystems enthält.

Die Verwendung von zwei verschiedenen Grundmischungen zur Herstellung der vulkanisierbaren Endmischung ist besonders bevorzugt. Es kann jedoch in manchen Fällen zweckmäßig und vorteilhaft sein, auch von einer größeren Anzahl verschiedener Mischungen auszugehen, die möglichst stark divergierende Anteile an Kautschuk, aktivem Füllstoff und Verstärkerharzsystem aufweisen, vorzugsweise 3 bis 5 verschiedene Mischungen, die sich auch durch den in ihnen enthaltenen Kautschuktyp unterscheiden können, und diese zu einer vulkanisierbaren erfindungsgemäßen Endmischung zu vereinigen.

Mit Hilfe der vorliegenden Erfindung lassen sich Gummivulkanisate herstellen, die eine geringere Wärmeentwicklung bei dynamischer Belastung aufweisen und dadurch weniger zu einem thermischen Abbau neigen als vergleichbare Vulkanisate, die aus nur einer Kautschukmischung hergestellt worden sind.

2

Fertigprodukte aus den erfindungsgemäßen Mischungen haben dadurch eine längere Lebensdauer und einen höheren Gebrauchswert. Außerdem wird bei der dynamischen Belastung ein geringerer Anteil der den Vulkanisaten zugeführten Energie in Wärme umgewandelt, so daß in den Fertigprodukten auch ein geringerer Energieverbrauch, z. B. in Form des Rollwiderstands von Fahrzeugreifen, auftritt. Im Zuge der Maßnahmen zur Energieeinsparung bei Fahrzeugen stellt dies einen unerwarteten und überraschenden Vorteil dar.

Die erfindungsgemäßen Gummimischungen enthalten mindestens einen Kautschuktyp und als sonstige Bestandteile übliche Substanzen wie Füllstoffe, Weichmacher, gegebenenfalls thermoplastische Copolymere, Vulkanisationsmittel, Beschleuniger, Aktivatoren, Verstärkerharzsysteme und gegebenenfalls Verarbeitungshilfsmittel bzw. besondere Zusätze, wie Wachse.

Gegenstand der Erfindung sind ferner auch ein Verfahren zur Herstellung der erfindungsgemäßen Kautschukmischungen aus mindestens zwei verschiedenen Grundmischungen, ihre Vulkanisation sowie ihre Verwendung, insbesondere zur Herstellung von Vulkanisaten für technische Artikel.

Geeignete Kautschuktypen sind die üblicherweise verwendeten Kautschuktypen, insbesondere z. B. Naturkautschuk (NR), Styrol-Butadien-Kautschuk (SBR), Polybutadien, Polyisopren, Transpolyoctenylen-Butylkautschuk, Ethylen-Propylen-Dien-Terpolymer-Kautschuk oder deren Gemische, wie sie beispielsweise in der Reifenindustrie oder zur Herstellung technischer Gummiwaren verwendet werden. Styrol-Butadien-Kautschuk und Naturkautschuk oder Mischungen dieser Kautschuktypen mit untergeordneten Mengen an anderen Kautschuktypen sind bevorzugt. Sie können in beliebiger Lieferform, z. B. als Ballen oder Pulver sowie z. B. auch mit Gehalten an Ruß eingesetzt werden.

Die Verstärkerharze sind im allgemeinen Phenolnovolake oder andere reaktive Polyphenole bzw. Mehrkernphenole wie Resorcin, Diphenylolpropan oder -methan bzw. Naphthole und analoge Verbindungen. Besonders geeignete Novolakharze sind z. B. solche, die aus Phenol und/oder mehrwertigen Ein-oder Mehrkernphenolen. wie z. B. Resorcin, Bisphenolen, wie z. B. Diphenylolpropan und/oder Diphenylolmethan, oder mit einer Kohlenwasserstoffgruppe substituierten ein- oder mehrwertigen Phenolen, wie z. B. Alkyl- oder Aralkylphenolen, vorzugsweise mit 1 bis 20, insbesondere 4 bis 18 C-Atomen im Substituenten, wie z. B. tert. Butylphenol, Octylphenol, Nonylphenol, Nierenbaum(Cashew-)Nußschalenöl, styrolysiertem oder mit Fettsäuren, wie Leinölfettsäuren, modifiziertem Phenol oder Phenylphenol durch Reaktion mit Aldehyden, wie Acetaldehyd, vorzugweise aber Formaldehyd, im sauren Medium erhalten werden können. Einsetzbar sind auch mit anorganischen Bestandteilen modifizierte Phenolharze zur Verstärkung von Kautschuk, vorzugsweise z. B. mit Silicium-, Aluminium- oder Bor-Verbindungen modifizierte Phenolharztypen. Die Novolake können außerdem weichmachende Anteile, wie z. B. Polyethylenglykole, Tallöl oder andere übliche Plastifizierungsmittel enthalten. Für den praktischen Gebrauch sind Novolake aus Phenol sowie Gemischen aus Phenol und mit einer Kohlenwasserstoffgruppe substituierten Phenolen mit 4 bis 18 C-Atomen im Substituenten einschließlich Nierenbaum-Nußschalenöl bevorzugt. Der Anteil der substituierten Phenole im Novolak kann dabei variieren, wobei jedoch der Novolak noch härtbar sein soll. Im allgemeinen liegt der Anteil an nichttrifunktionellen Phenolen im Gesamtgehalt der Phenole nicht höher als 80, vorzugsweise nicht höher als 65 Mol-%.

Erfindungsgemäß werden die Novolake in mindestens einer der Grundmischungen in einer Menge von 2 bis 30, bevorzugt 2,5 bis 27, besonders bevorzugt 3 bis 25 GT, bezogen auf 100 GT der in der Endmischung insgesamt eingesetzten Kautschukmenge, eingesetzt. Das Härtungsmittel kann dabei gemeinsam mit dem Novolak oder getrennt eingearbeitet werden.

Als Härtungsmittel für den Phenolnovolak können beliebige Formaldehyd abspaltende und/oder freie oder veretherte Methylolgruppen enthaltende Verbindungen verwendet werden, beispielsweise Aminharze, wie z. B. Harnstoffharze oder Benzoguanaminharze. Bevorzugt sind aber Hexamethylentetramin (im nachfolgenden mit "Hexa" bezeichnet) sowie Melaminharze, letztere in Form von nicht oder von teilweise oder von weitgehend veretherten und ggf. von höherkondensierten mehrkernigen Produkten. Der Kondensationsgrad der Aldehyd-, insbesondere Formaldehyd-Harze und ihr Gehalt an freien Methylolgruppen kann in gewissen Grenzen schwanken. Die freien Methylolgruppen können mit einwertigen Alkoholen mit 1 bis 12, vorzugsweise 1 bis 8, C-Atomen verethert sein, wie z. B. Methanol, Ethanol, den verschiedenen isomeren Propanolen, Butanolen, Nonanolen, Dodecylalkohol. Verbreiteten Einsatz findet z. B. Hexamethoxymethylmelamin.

Die zur Härtung der Novolak-Harze erforderlichen optimalen Mengen Härtungsmittel müssen generell in Vorversuchen, die einfach durchzuführen sind, ermittelt werden. Im allgemeinen werden etwa 2 bis 60, vorzugsweise 5 bis 50, Gew.-% Melaminharz, oder 2 bis 30, vorzugsweise 2 bis 25, Gew.-% Hexamethylentetramin verwendet, bezogen auf das Novolak-Harz.

Als Füllstoffe können neben aktiven Rußen und Kieselsäuren auch Kaoline, Kreide und/oder andere übliche Materialien Einsatz finden sowie auch Pigmente. Der Einsatz von Ruß ist besonders bevorzugt. In manchen Fällen wird auf den Einsatz von Füllstoffen weitgehend verzichtet, z. B. in transparenten Mischungen. Als weichmachende Öle, eignen sich die in der Kautschuktechnologie üblichen Produkte, insbesondere naphthenische und aromatische Öle.

Die Vulkanisation der erfindungsgemäßen Gummimischungen kann ohne Schwefel mit Vulkanisationsharzen erfolgen. Die Vulkanisation in Gegenwart von Schwefel ist jedoch bevorzugt. Ihr Verlauf kann durch Auswahl geeigneter, in der Kautschuktechnologie üblicher Beschleuniger, Aktivatoren und Regler den praktischen Erfordernissen angepaßt werden. Ferner können den vulkanisierbaren Mischungen vorteilhaft noch Alterungsschutzmittel zur weiteren Verbesserung der Eigenschaften der Vulkanisate zugesetzt werden.

Die erfindungsgemäß eingesetzten Kautschuk-Ausgangsmischungen, wie z. B. die Grundmischungen A und B, können jeweils in üblicher Weise in Innenmischern oder auf Mischwalzen hergestellt werden. Beim Einarbeiten der Verstärkerharze kann es von Vorteil sein, wenn die Mischungstemperatur in irgendeiner Phase der Mischungsherstellung den Schmelzpunkt der Harze überschreitet, jedoch können ggf. auch mit Formulierungen, bei denen nach Zugabe der Harze die Mischtemperatur unterhalb des Schmelzpunktes bleibt, höhere Härten erzielt werden. Ferner ist wichtig, daß die Härtungsmittel unter solchen Bedingungen eingearbeitet werden, unter denen es nicht zu einer vorzeitigen Eigenkondensation oder zu einer vorzeitigen Reaktion mit dem zu härtenden Novolak kommt. Das ist z. B. dadurch möglich, daß die Härtungsmittel erst am Ende des Mischvorgangs bei nicht zu hohen Temperaturen (im allgemeinen bei 80 bis 120°C) eingearbeitet werden. Zum Schluß der Mischungsherstellung werden die separat hergestellten Ansätze, wie z. B. die Grundmischungen A und B, vereinigt, miteinander vermischt und schließlich, gegebenenfalls unter Formgebung, bei erhöhter Temperatur in üblicher Weise vulkanisiert.

Die erfindungsgemäß erhaltenen Vulkanisate können beispielsweise als Bauteile von Fahrzeugreifen, wie Laufflächen, Seitenwände, Gürtellagen oder Kissen, sowie als technische Gummiwaren, wie z. B. Gummimanschetten, Beläge und Förderbänder, verwendet werden. Dabei kann der Einsatz der erfindungsgemäßen Mischungen auch in denjenigen Gummischichten erfolgen, die eine gute Haftung zu eingelegten Geweben oder Geflechten aufweisen müssen. Zur Verbesserung der Haftung kann zusätzlich noch die Anwendung von Haftvermittlern, wie z. B. Kobalt- oder anderen Metallverbindungen und/oder Kombinationen aus Kieselsäure, Resorcin und Härtungsmittel erfolgen.

Die Erfindung wird durch die nachfolgenden Beispiele näher erläutert.

Die in den folgenden Beispielen beschriebenen Versuche dienen zur Erläuterung der Zusammensetzung der erfindungsgemäßen Gummimischungen sowie der Eigenschaften der daraus hergestellten Vulkanisate. Es wurden bei den erfindungsgemäßen Beispielen jeweils mindestens zwei verschiedene Mischungsansätze, Batch A und Batch B, hergestellt, die sich in ihren Gehalten an Kautschuk, Ruß, Öl und Verstärkerharz deutlich unterscheiden. Die erhaltenen Mischungsansätze A und B wurden sodann miteinander zu einer erfindungsgemäßen Gesamtmischung bzw. Endmischung vermischt und vulkanisiert.

In den Vergleichsbeispielen wurde vergleichsweise dazu die vulkanisierbare Gesamtmischung in einem einzigen Mischungsansatz hergestellt, dessen prozentuale Zusammensetzung jeweils derjenigen der Endmischung eines der erfindungsgemäßen Beispiele entspricht, und die erhaltene Gesamtmischung unter ebenfalls vergleichbaren Bedingungen vulkanisiert.

Die als übrige Bestandteile (ÜB) der Mischungen in den Beispielen bzw. den Vergleichsbeispielen aufgeführten Anteile wurden nicht variiert und, bezogen auf 100 Gew.-Teile Kautschuk, in den folgenden Gewichtsmengen zugegeben (GT = Gew.-Teile):

| | |
|---|---|
| 2 GT | Stearinsäure |
| 3 GT | Zinkoxid |
| 1 GT | N-isopropyl-N-phenyl-p-phenylendiamin * |
| 1 GT | 2,2,4-Trimethyl-1,2-dihydrochinolin * |
| 1,8 GT | Schwefel |
| 1,5 GT | Benzothiazol-2-cyclohexylsulfenamid ** |
| 0,2 GT | Merkaptobenzthiazol |
| Sa. 10,5 GT | |

* als Alterungsschutzmittel
** als Beschleuniger

Die Mischungen wurden auf einer Mischwalze hergestellt. Die Vulkanisation erfolgte während 30 min. bei 155°C.

Beim Mischvorgang wurden zum Kautschuk bzw. zu einem Masterbatch mit Ruß die ggf. noch fehlende Menge an Ruß, danach das Öl und die weiteren Komponenten in der Reihenfolge Stearinsäure, Zinkoxid und Alterungsschutzmittel zugegeben. Bei den Ansätzen mit Verstärkerharz wurde dieses anschließend bei Temperaturen zwischen 90 und 100°C eingemischt und kurz bei 110 bis 120°C homogenisiert. Der Schwefel, der Beschleuniger und das Härtungsmittel wurden bei allen Ansätzen zum Schluß des Mischvorgangs bei Temperaturen unter 100°C zugemischt. Als Verstärkerharz wurde ein handelsüblicher modifizierter Phenolnovolak, der einen Schmelzbereich von 70 bis 80°C, gemessen nach dem Kapillarverfahren, und eine Viskosität der 50 gew.-%igen Lösung in Ethylenglykolmonoethylether bei 20°C von 600 bis 1000 mPa•s aufweist, verwendet. Als Härtungsmittel diente Hexamethylentetramin (Hexa). Nach der Vulkanisation der Endmischungen wurden die erhaltenen Vulkanisate auf folgende Eigenschaften nach den in der Praxis üblichen Prüfmethoden untersucht: Reißfestigkeit, Reißdehnung und Spannungswerte (bei 10 % bis 300 % Dehnung) gemäß DIN 53504; Härte Shore A nach DIN 53505; Rückprallelastizität nach DIN 53512; Temperaturanstieg nach 5 und nach 15 min Belastung in einem Rollbiege-Prüfgerät, wobei ein Prüfzylinder von 20 mm Durchmesser und 100 mm Länge unter einem Auslenkungswinkel eines Endes von 45° bei einer Umdrehungszahl pro Minute von ca. 1400 dynamisch verformt wird;
Plastizität der unvulkanisierten Mischungen im Scherenscheiben-Viskometer nach Mooney gemäß DIN 53524;

Versuchsergebnisse

Die Untersuchungen erfolgten mit Mischungen, deren Zusammensetzungen aus den Tabellen 1 und 2 ersichtlich sind. Auch die Prüfergebnisse mit den Vulkanisaten sind in den Tabellen 1 und 2 aufgeführt.
Die Tabelle 1 enthält die Beispiele 1 und 2 sowie das Vergleichsbeispiel 1 mit den entsprechenden Mischungszusammensetzungen und den Prüfergebnissen an den Vulkanisaten.

Tabelle 1

| Mischungsbestandteile | | Beispiel | | Vergleichs- |
| --- | --- | --- | --- | --- |
| | | 1 | 2 | beispiel 1 |
| Batch A | SBR-Kautschuk | 80 GT | 70 GT | |
| | Ruß N 330 | 60 GT | 55 GT | |
| | aromat. Öl | 15 GT | 10 GT | |
| | Phenolnovolak | 9 GT | 9 GT | |
| | Hexa | 1 GT | 1 GT | |
| | übrige Bestand-teile (ÜB) | 8,4 GT | 7,35 GT | |
| Batch B | SBR-Kautschuk | 20 GT | 30 GT | |
| | Ruß N 330 | 5 GT | 10 GT | |
| | aromat. Öl | -- | 5 GT | |
| | Phenolnovolak | -- | -- | |
| | Hexa | -- | -- | |
| | übrige Bestand-teile (ÜB) | 2,1 GT | 3,15 GT | |
| End-mischung | SBR-Kautschuk | 100 GT | 100 GT | 100 GT |
| | Ruß N 330 | 65 GT | 65 GT | 65 GT |
| | aromat. Öl | 15 GT | 15 GT | 15 GT |
| | Phenolnovolak | 9 GT | 9 GT | 9 GT |
| | Hexa | 1 GT | 1 GT | 1 GT |
| | übrige Bestand-teile (ÜB) | 10,5 GT | 10,5 GT | 10,5 GT |
| Mooney-Plastizität, gemessen bei 120°C | | | | |
| | Batch A | 40 | 35 | - |
| | Batch B | 33 | 21 | - |
| | Endmischung | 37 | 29 | 35 |

6

(Fortsetzung von Tabelle 1)

|  | Beispiel | | Vergleichs- |
|  | 1 | 2 | beispiel 1 |
|---|---|---|---|
| Vulkanisationsdauer bei 155°C | 30 min | 30 min | 30 min |
| **Prüfergebnisse am Vulkanisat:** | | | |
| Reißfestigkeit (MPa) | 17,0 | 17,9 | 17,3 |
| Reißdehnung (%) | 327 | 425 | 469 |
| Spannungswert (MPa) 10 % Dehnung | 1,7 | 1,2 | 1,5 |
| Spannungswert (MPa) 50 % Dehnung | 3,0 | 2,2 | 2,4 |
| Spannungswert (MPa) 100 % Dehnung | 4,7 | 3,5 | 3,5 |
| Spannungswert (MPa) 200 % Dehnung | 10,3 | 8,1 | 7,2 |
| Rückprall- elastizität 23°C (%) | 35 | 32 | 35 |
| Härte Shore A bei 23°C (°) | 82 | 77 | 86 |
| Temperaturanstieg im Rollbiege- Prüfgerät nach | | | |
| 5 min (°C) | 43 | 36 | 63 |
| 15 min (°C) | 54 | 47 | 73 |

Bei identischer Zusammensetzung der Endmischungen ist aus den erfindungsgemäßen Beispielen 1 und 2 deutlich der an den Vulkanisaten gemessene geringere Temperaturanstieg bei dynamischer Verformung ersichtlich, vergleichsweise zu dem aus nur einem einzigen Mischungsansatz hergestellten Vulkanisat des Vergleichsbeispiels 1. So lagen im Rollbiegetest die vergleichsweise gemessenen Temperaturen an den Vulkanisaten aus den erfindungsgemäßen Gummimischungen der Beispiele 1 und 2 um etwa 20°C oder mehr unterhalb der an dem Vulkanisat des Vergleichsbeispiels 1 gemessenen Temperatur.

Die Tabelle 2 enthält die Beispiele 3 und 4 sowie das Vergleichsbeispiel 2 mit den entsprechenden Mischungszusammensetzungen und den Prüfergebnissen an den Vulkanisaten.

## Tabelle 2

| Mischungsbestandteile | | Beispiel | | Vergleichs- |
|---|---|---|---|---|
| | | 3 | 4 | beispiel 2 |
| Batch A | SBR-Kautschuk | 80 GT | 70 GT | |
| | Ruß N 330 | 50 GT | 45 GT | |
| | aromat. Öl | 5 GT | 5 GT | |
| | Phenolnovolak | 18 GT | 18 GT | |
| | Hexa | 2 GT | 2 GT | |
| | übrige Bestand-teile (ÜB) | 8,4 GT | 7,35 GT | |
| Batch B | SBR-Kautschuk | 20 GT | 30 GT | |
| | Ruß N 330 | 5 GT | 10 GT | |
| | aromat. Öl | -- | 5 GT | |
| | Phenolnovolak | -- | -- | |
| | Hexa | -- | -- | |
| | übrige Bestand-teile (ÜB) | 2,1 GT | 3,15 GT | |

8

(Fortsetzung von Tabelle 2)

| Mischungsbestandteile | | Beispiel | | Vergleichs- |
|---|---|---|---|---|
| | | 3 | 4 | beispiel 2 |
| End- mischung | SBR-Kautschuk | 100 GT | 100 GT | 100 GT |
| | Ruß N 330 | 55 GT | 55 GT | 55 GT |
| | aromat. Öl | 5 GT | 10 GT | 10 GT |
| | Phenolnovolak | 18 GT | 18 GT | 18 GT |
| | Hexa | 2 GT | 2 GT | 2 GT |
| | übrige Bestand- teile (ÜB) | 10,5 GT | 10,5 GT | 10,5 GT |
| Mooney-Plastizität, gemessen bei 120°C | | | | |
| | Batch A | 44 | 33 | - |
| | Batch B | 33 | 21 | - |
| | Endmischung | 31 | 28 | 26 |
| Vulkanisationsdauer bei 155°C | | 30 min | 30 min | 30 min |
| Prüfergebnisse am Vulkanisat: | | | | |
| Reißfestigkeit | (MPa) | 17,4 | 17,2 | 15,0 |
| Reißdehnung | (%) | 338 | 361 | 417 |
| Spannungswert 10 % Dehnung | (MPa) | 2,4 | 2,1 | 2,8 |
| Spannungswert 50 % Dehnung | (MPa) | 4,2 | 3,7 | 3,7 |
| Spannungswert 100 % Dehnung | (MPa) | 6,3 | 5,9 | 4,9 |
| Spannungswert 200 % Dehnung | (MPa) | 11,3 | 10,9 | 8,3 |
| Rückprall- elastizität 23°C | (%) | 38 | 37 | 38 |

(Fortsetzung von Tabelle 2)

| Prüfergebnisse am Vulkanisat: | | Beispiel | | Vergleichs- |
|---|---|---|---|---|
| | | 3 | 4 | beispiel 2 |
| Härte Shore A bei 23°C | (°) | 90 | 87 | 88 |
| Temperaturanstieg im Rollbiege- Prüfgerät nach | | | | |
| 5 min | (°C) | 71 | 62 | 91 |
| 15 min | (°C) | 89 | 76 | 105 |

In den Beispielen 3 und 4 wurde mit einem höheren Zusatz an Verstärkerharz gearbeitet, so daß sowohl höhere Spannungswerte als auch größere Härten bei den Vulkanisaten resultierten. Auch hierbei war die Erwärmung bei den nach den erfindungsgemäßen Beispielen 3 und 4 hergestellten Vulkanisaten im Rollbiegetest vergleichsweise deutlich geringer als bei dem Vulkanisat des Vergleichsbeispiels 2.

**Patentansprüche**

1. Kautschukvulkanisate, hergestellt aus vulkanisierbaren Gummimischungen auf Basis mindestens eines Kautschuktyps und sonstigen üblichen Bestandteilen, dadurch gekennzeichnet, daß die Gummimischungen durch Vermischen von mindestens zwei Kautschukmischungen A und B unterschiedlicher Zusammensetzung hergestellt wurden, wobei die eine Mischung A 50 bis 95 GT Kautschuk, 30 bis 150 GT Füllstoff, und eine weitere Mischung B 50 bis 5 GT Kautschuk, 80 bis 5 GT Füllstoff, bezogen auf 100 GT der in der Endmischung insgesamt eingesetzten Kautschukmenge, und mindestens eine der Grundmischungen 2 bis 30 GT eines Verstärkerharzsystems enthielten.

2. Verfahren zur Herstellung von Kautschukvulkanisaten nach Anspruch 1 aus vulkanisierbaren Gummimischungen auf Basis mindestens eines Kautschuktyps und sonstigen üblichen Bestandteilen, dadurch gekennzeichnet, daß man jeweils mindestens zwei verschiedene Kautschukmischungen, die sich in ihren Gehalten an mindestens einer, vorzugsweise zwei und insbesondere drei oder mehr der Komponenten Kautschuk, Füllstoff, Öl, Verstärkerharzsystem und gegebenenfalls thermoplastischem Copolymer voneinander unterscheiden, durch Vermischen ihrer Bestandteile herstellt, anschließend die erhaltenen Mischungen miteinander vermischt und die resultierende Endmischung, gegebenenfalls unter Formgebung, bei erhöhter Temperatur vulkanisiert.

3. Ausführungsform nach Anspruch I oder 2, dadurch gekennzeichnet, daß das Verstärkerharzsystem aus einem Novolak und einem mit diesem gemeinsam oder getrennt eingearbeiteten Härtungsmittel besteht.

4. Ausführungsform nach einem oder mehreren der Ansprüche 1 bis 3, dadurch gekennzeichnet, daß das Härtungsmittel aus Hexamethylentetramin oder einem Melaminharz besteht.

5. Ausführungsform nach einem oder mehreren der Ansprüche 1 bis 4, dadurch gekennzeichnet, daß der Novolak in der Mischung A in einer Menge von 2 bis 30 GT, bezogen auf 100 GT der in der Endmischung insgesamt eingesetzten Kautschukmenge, eingesetzt wird.

6. Ausführungsform nach einem oder mehreren der Ansprüche 1 bis 4, dadurch gekennzeichnet, daß der Novolak in der Mischung B in einer Menge von 2 bis 30 GT, bezogen auf 100 GT der in der Endmischung insgesamt eingesetzten Kautschukmenge, eingesetzt wird.

7. Ausführungsform nach einem oder mehreren der Ansprüche 1 bis 6, dadurch gekennzeichnet, daß der Novolak aus Phenol bzw. dessen Gemischen mit solchen Phenolen, die durch eine Kohlenwasserstoffgruppe mit bis zu 18 C-Atomen substituiert sind, einerseits und Formaldehyd andererseits aufgebaut ist.

8. Ausführungsform nach einem oder mehreren der Ansprüche 1 bis 7, dadurch gekennzeichnet, daß der Kautschuk aus Styrol-Butadien- und/oder Naturkautschuk oder Mischungen dieser Kautschuktypen mit untergeordneten Mengen an anderen Kautschuktypen besteht.

9. Ausführungsform nach einem oder mehreren der Ansprüche 1 bis 8, dadurch gekennzeichnet, daß der aktive anorganische Füllstoff zumindest überwiegend aus Ruß besteht.

10. Technische Gummiwaren und Reifen, die aus bzw. unter Verwendung von Kautschukvulkanisaten nach einem oder mehreren der Ansprüche 1 und 3 bis 9 oder solchen, die nach dem Verfahren des Anspruchs 2 erhalten worden sind, hergestellt sind.

## Claims

1. Rubber vulcanizate prepared from vulcanizable rubber mixtures based on at least one type of rubber and other customary constituents, wherein the rubber mixtures were prepared by mixing at least two rubber mixtures A and B of different compositions, the first mixture A containing 50 to 95 parts by weight of rubber and 30 to 150 parts by weight of filler, and a further mixture 8 containing 50 to 5 parts by weight of rubber and 80 to 5 parts by weight of filler, relative to 100 parts by weight of the total amount of rubber employed in the final mixture, and at least one of the base mixtures containing 2 to 30 parts by weight of a reinforcing res in system.

2. A process for the preparation of rubber vulcanizates as claimed in claim 1 from vulcanizable rubber mixtures based on at least one type of rubber and other customary constituents, which comprises preparing in each case at least two different rubber mixtures differing from one another in their content of at least one, preferably two and especially three or more, of the components rubber, filler, oil, reinforcing resin system and, if appropriate, thermoplastic copolymer, by mixing the constituents thereof, then mixing the resulting mixtures with one another and vulcanizing the resulting final mixture at an elevated temperature, if appropriate while it is shaped.

3. The embodiment as claimed in claim 1 or 2, wherein the reinforcing resin system is comprised of a novolak and a curing agent which is incorporated together with this novolak or separately.

4. The embodiment as claimed in one or more of claims 1 to 3, wherein the curing agent is comprised of hexamethylenetetramine or a melamine resin.

5. The embodiment as claimed in one or more of claims 1 to 4, wherein the novolak in mixture A is employed in an amount of 2 to 20 parts by weight, relative to 100 parts by weight of the total amount of rubber employed in the final mixture.

6. The embodiment as claimed in one or more of claims 1 to 4, wherein the novolak in mixture B is employed in an amount of 2 to 30 parts by weight, relative to 100 parts by weight of the total amount of rubber employed in the final mixture.

7. The embodiment as claimed in one or more of claims 1 to 6, wherein the novolak is comprised on the one hand, of phenol or mixtures thereof with phenols which are substituted by a hydrocarbon group having up to 18 carbon atoms, and, on the other hand, of formaldehyde.

**8.** The embodiment as claimed in one or more of claims 1 to 7, wherein the rubber is comprised of styrene/butadiene rubber and/or natural rubber or mixtures of these types of rubber together with minor amounts of other types of rubber.

**9.** The embodiment as claimed in one or more of claims 1 to 8, wherein the active inorganic filler is comprised at least predominantly, of carbon black.

**10.** Industrial rubber goods and tires prepared from, or with the use of, rubber vulcanizates as claimed in one or more of claims 1 and 3 to 9 or rubber vulcanizates which have been obtained by the process of claim 2.

**Revendications**

**1.** Vulcanisats de caoutchouc, fabriqués à partir de mélanges de caoutchoucs vulcanisables à base d'au moins un type de caoutchouc et d autres constituants habituels, caractérisés en ce que les mélanges de caoutchoucs sont préparés par mélange d'au moins deux mélanges de caoutchoucs A et B de différentes compositions, dans lesquels un mélange de base A contient de 50 à 95 parties en poids de caoutchouc, de 30 à 150 parties en poids de charge, et un autre mélange de base B contient de 50 à 5 parties en poids de caoutchouc et de 80 à 5 parties en poids de charge, par rapport à 100 parties en poids du caoutchouc total mis en oeuvre dans le mélange final, et au moins un des mélanges de base contient de 2 à 30 parties en poids d'un système de résine de renforcement.

**2.** Procédé de fabrication de vulcanisats de caoutchouc selon la revendication 1, à partir de mélanges de caoutchoucs vulcanisés à base d'au moins un type de caoutchouc et d'autres constituants usuels, caractérisé en ce qu'on prépare chaque fois, en mélangeant leurs constituants, au moins deux mélanges de caoutchouc différents, qui se distinguent l'un de l'autre par leurs teneurs en au moins un, de préférence deux et en particulier trois composant(s) ou plus, parmi les composants suivants: caoutchouc, charge, huile, système de résine de renforcement et, éventuellement, copolymère thermoplastique, on mélange ensuite entre eux les mélanges obtenus, et on vulcanise, à température élevée, le mélange final résultant, éventuellement en le mettant en forme.

**3.** Mode de réalisation selon la revendication 1 ou 2, caractérisé en ce que le système de renforcement se compose d'une novolaque et d'un durcisseur qui lui est incorporé conjointement ou séparément.

**4.** Mode de réalisation selon une ou plusieurs des revendications 1 à 3, caractérisé en ce que le durcisseur se compose d'hexaméthylènetétramine ou d'une résine de mélamine.

**5.** Mode de réalisation selon une ou plusieurs des revendications 1 à 4, caractérisé en ce que la novolaque est introduite dans le mélange A à raison de 2 à 30 parties en poids, par rapport à 100 parties en poids de la quantité totale de caoutchouc mise en oeuvre dans le mélange final.

**6.** Mode de réalisation selon une ou plusieurs des revendications 1 à 4, caractérisé en ce que la novolaque est introduite dans le mélange B à raison de 2 à 30 parties en poids, par rapport à 100 parties en poids de la quantité totale de caoutchouc mise en oeuvre dans le mélange final.

**7.** Mode de réalisation selon une ou plusieurs des revendications 1 à 6, caractérisé en ce que la novolaque est constituée de phénol ou de ses mélanges avec des phénols substitués par un groupe hydrocarboné comportant jusqu'à 18 atomes de carbone d'une part, et de formaldéhyde d'autre part.

**8.** Mode de réalisation selon une ou plusieurs des revendications 1 à 7, caractérisé en ce que le caoutchouc se compose de caoutchouc styrène-butadiène et/ou de caoutchouc naturel ou de mélanges de ces types de caoutchouc avec des proportions mineures d'autres types de caoutchouc.

**9.** Mode de réalisation selon une ou plusieurs des revendications 1 à 8, caractérisé en ce que la charge minérale active se compose au moins essentiellement de noir de carbone.

10. Produits industriels en caoutchouc et pneumatiques, fabriqués à partir des (ou à l'aide des) vulcanisats de caoutchouc selon une ou plusieurs des revendications 1 et 3 à 9 ou des vulcanisats obtenus d'après le procédé de la revendication 2.